# EUROPÄISCHE PATENTSCHRIFT

(11) **EP 1 647 535 B1**
(45) Veröffentlichungstag und Bekanntmachung des Hinweises auf die Patenterteilung: **25.07.2007**
(21) Anmeldenummer: 05021578.9
(22) Anmeldetag: 01.10.2005
(51) Int. Cl.: C03C 15/00

(54) **Verfahren zur Mikrostrukturierung von Substraten aus Flachglas**
Method for microstructuring flat glass substrates
Procédé pour microstructurer substrats de verre plat

(30) Priorität: 09.10.2004 DE 102004049233
(43) Veröffentlichungstag der Anmeldung: 19.04.2006
(73) Patentinhaber: Schott AG, 55122 Mainz (DE)
(72) Erfinder: Schreder, Bianca, 60322 Frankfurt (DE); Liebald, Rainer, 64569 Nauheim (DE); Pawlowski, Edgar, 55271 Stadecken-Elsheim (DE); Sprenger, Dirk, 55271 Stadecken-Elsheim (DE); Mund, Dietrich, 84101 Obersüssbach (DE); Leib, Jürgen, 85354 Freising (DE)
(74) Vertreter: Fuchs

(56) Entgegenhaltungen:
- EP-A- 0 296 419
- EP-A- 0 442 488
- EP-A- 0 644 462
- EP-A- 1 193 747
- WO-A-98/15504
- DE-A1- 19 844 025
- US-A- 4 522 681
- US-A- 4 711 698
- US-A- 4 807 016
- US-A- 4 904 341
- US-A- 5 213 659
- US-A- 5 284 549
- US-A- 5 413 670
- US-A- 6 039 851

## Beschreibung

Die Erfindung betrifft ein Verfahren zur Mikrostrukturierung von Substraten aus Multikomponentenglas mit wenigstens zwei Komponenten, insbesondere aus Flachglas. Eine Substratoberfläche des Glases wird mit wenigstens einer strukturierten Maskierschicht beschichtet und anschließend einem chemisch reaktiven lonenätzverfahren (RIE) mit wenigstens einem Ätzgas ausgesetzt, wobei dem chemischen Ätzgas wenigstens ein Edelgas beigemischt wird. Bei der Bestimmung der Anzahl der Komponenten des Multikomponentenglases werden in üblicher Weise die Anionen (z. B. Sauerstoff) nicht mitgezählt.

Durch das Aufbringen von Mikrostrukturen lassen sich die optischen Eigenschaften von Glas (oder Gläsern) ändern. Diese Mikrostrukturen sind u. a. für diffraktive optische Elemente (DOE) und für mikro-optische Elemente, beispielsweise in Projektions- und Objektivsystemen, in optischen Filtern, bei der Strahlformung, sowie der Strahl- und Farbkorrektur aber auch bei der Fluidik, bei Mikroreaktoren und anderen Anwendungen erforderlich.

In der EP 0644 462 B1 wird ein Verfahren angegeben, bei dem die Herstellung von Mikrostrukturen auf Substraten durch reaktives Ionenstrahlätzen (reactive ion beam etching, RIBE) erfolgt. Hierbei wird eine Ionenquelle mit einer Kathode und einer Einlassleitung für reaktive Gase oder Gasgemische verwendet. Es werden bevorzugt fluorhaltige gasförmige Ätzmittel, wie zum Beispiel CF₄ oder CHF₃ verwendet. Es kann auch eine Mischung aus reaktiven Gasen und Inertgasen verwendet werden. Durch reaktives lonenstrahlätzen werden jedoch die Bauteile und die Ätzapparatur hohen Belastungen ausgesetzt. Zum anderen können durch diese Ätzverfahren nicht die erforderlichen Strukturtiefen bei vertretbarem Aufwand erreicht werden.

Die DE 198 44 025 A1 beschreibt unterschiedliche Trockenätzverfahren zur Bearbeitung optischer Oberflächen sowie zur Übertragung optischer Strukturelemente in optische Materialien für die Mikrostrukturierung von Quarz, Quarzglas und quarzglashaltigen Oberflächen. Neben einem lonenstrahlätzprozess für die lokale Oberflächenbearbeitung wird auch ein reaktives Ionenätzverfahren (reaktive ion etching, RIE) beschrieben, bei dem als Hauptbestandteile des Ätzgases CF₄, C₂F₆ oder CHF₃ unter Zumischung von SF₆, XeF₂, NF₃ oder CH₄ verwendet werden. Die lonenenergie soll größer als 600 eV gewählt werden, um einen hinreichend hohen Sputteranteil am Ätzprozess zu gewährleisten. Durch diese Wahl der Ätzgase soll eine nachteilige Vergrößerung der Oberflächenrauhigkeit vermieden werden. Jedoch lassen sich durch die beschriebenen Verfahren für einige bevorzugte Glassorten keine Ätzraten erreichen, die den heutigen Anforderungen genügen.

Ezz Eldin Metwalli und Carlo G. Pantano, Nuclear Instruments and Methods in Physics Research B 207 (2003) 21-27 haben die Anwendung des magnetisch unterstützten reaktiven lonenätzverfahren (magnetically enhanced reactive ion etching, MERIE) an siliziumhaltigen und phosphorhaltigen Gläsern einerseits in CF₄/CHF₃-Plasma und andererseits zu Vergleichszwecken in Argon-Plasma untersucht. Dabei wurde insbesondere gefunden, dass das MERIE dem konventionellen RIE hinsichtlich der Ätzraten überlegen sein kann und dass in Fluorkohlenstoffplasmen die Ätzrate des Glases mit Zunahme von weniger chemisch löslichen Oxiden im Glas abnimmt. Bei einem reinen Argon-Plasma weisen Silikatgläser, borhaltige Gläser und Gläser mit anderen Komponenten verglichen mit einem phosphathaltigen Glas eine signifikant niedrigere Ätzrate auf. Die vergleichsweise höhere Ätzrate bei phosphathaltigen Gläsern wird darauf zurückgeführt, dass der Ätzmechanismus durch das physikalische Sputtern beherrscht wird und somit die vergleichsweise niedrige Bindungsenergie an der Phosphatglasoberfläche überwunden werden kann. Diese Ergebnisse stellen sich jedoch nicht ein, bei Anwendung eines CF₄-Plasmas. Hier liegt die Ätzrate für Quarzglas deutlich über der Ätzrate anderen untersuchten Gläser. Die Ursache hierfür wird darin gesehen, dass beim chemischen Ätzen von SiO₂ flüchtiges SiF₄ erzeugt wurde. Gläser mit Komponenten, die nichtflüchtige Fluoride ergeben, galten bisher als schwer oder nicht ätzbar u.a. wg. Verschlechterung der Oberflächenrauhigkeit.

Die US-4 904 341 A beschreibt ein Verfahren zur Herstellung von supraleitenden integrierten Schaltkreisen, bei dem auf ein Substrat mit supraleitender Struktur ein Siliziumdioxidfilm aufgebracht wird. Um Anschlussflächen zum Supraleiter freizulegen, wird auf den Siliziumdioxidfilm ein Abdecklack aufgetragen und in Bereichen der gewünschten Anschlussstellen teilweise wieder entfernt. Die freigelegten Bereiche werden einem reaktiven lonenätzverfahren ausgesetzt, wobei NF₃ verwendet wird, dem ein Edelgas (z. B. Argon) beigemischt ist. Durch die gewählte Gaszusammensetzung soll eine Selektivität erreicht werden, durch die das Siliziumdioxid, nicht aber die supraleitende Nb- oder NbN-Struktur weggeätzt wird, wobei die Beimischung des Argon das Plasma stabilisiert und eine gleichmäßige Ätzung über die ganze Wafer-Oberfläche bewirkt. Probleme, die bei der Mikrostrukturierung von Substraten aus Multikomponentengläsem auftreten, werden in der US-4 904 341 A nicht behandelt.

Die der Erfindung zugrunde liegende Aufgabe wird darin gesehen, ein Verfahren der eingangs genannten Art anzugeben, durch welches die vorgenannten Probleme überwunden werden. Insbesondere soll das Verfahren die Herstellung hochqualitativer Strukturen mit hoher Strukturtiefe bei geringen Strukturdimensionen ermöglichen und möglichst hohe Ätzraten erreichen. Das Verfahren soll auch bei preiswerten Gläsern gute Ergebnisse liefern, die bisher wegen der schlechten chemischen Löslichkeit ihrer Komponenten für die Mikrostrukturierung im RIE-Prozess als nicht geeignet angesehen wurden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Trockenätzverfahren mittels RIE dient der Mikrostrukturierung von Substraten aus Glas, in der Regel aus Flachglas. Die verwendeten Gläser können Dicken von etwa 50 µm bis hinauf zu 16 mm (BF 40-Proben) haben. Die Substratoberfläche wird zunächst mit wenigstens einer strukturierten Maskierschicht beschichtet und anschließend einem reaktiven lonenätzverfahren mit wenigstens einem chemischen Ätzgas ausgesetzt. Anstelle eines RIE-Verfahrens kann erfindungsgemäß auch ein MERIE-Verfahren verwendet werden, bei dem der RIE-Prozess magnetisch unterstützt wird. Das lonenätzverfahren unterscheidet sich von aus dem Stand der Technik bekannten Verfahren dadurch, dass dem chemischen Ätzgas wenigstens ein Edelgas beigemischt wird, so dass der Anteil des Sputterätzens beim lonenätzverfahren signifikant erhöht wird.

Damit werden die Vorteile des chemischen Plasmaätzens, bei dem eine chemische Reaktion mit dem Reaktionsgas erfolgt und flüchtige Gase gebildet werden, und des physikalischen Sputterätzens, bei dem durch Ionenbeschuss mit Ionen, Atome und Cluster durch mechanischen Impuls gelöst werden, in unerwarteter Weise besonders wirkungsvoll miteinander kombiniert. Dabei werden Komponenten, die chemisch nicht gelöst werden und zunächst stehen bleiben, durch das physikalische Sputtern gelöst. Dies führt einerseits zu hohen Ätzraten und andererseits wegen des anisotropen Abtrags infolge des Sputterns zu einer präzisen Strukturübertragung bei sehr geringen Strukturdimensionen. Des Weiteren ergibt sich eine Oberfläche mit einer geringen Rauhigkeit, die sich kaum von der Rauhigkeit des Substratglases unterscheidet. Die Oberflächenrauhigkeit nimmt durch diesen RIE-Prozess gegenüber ungeätzten Glasoberflächen nicht signifikant zu. Im Gegenteil konnten sogar verbesserte Rauheiten nachgewiesen werden. Auch konnte keine Abhängigkeit der Oberflächenrauhigkeit von der verwendeten Plasmaleistung festgestellt werden.

Es hat sich in überraschender Weise herausgestellt, dass durch die Verwendung eines Ätzgasgemisches aus wenigstens einem Ätzgas und einem Edelgas eine erhebliche Steigerung der Ätzrate sowohl im Vergleich zu reinem physikalischen Ätzen als auch zu reinen chemischen Ätzen eintritt. Diese Steigerung der Ätzrate lässt sich nicht mit den bekannten Modellen erklären, nach denen zum einen Gläser mit hohem SiO₂-Anteil eine höhere Ätzrate aufweisen sollten als solche mit geringem SiO₂-Anteil, sowie zum anderen eine für verschiedene Multikomponentenflachgläser nahezu gleiche Ätzrate bei rein physikalisches Ätzen gefunden wurde. Überraschenderweise wurden besonders gute Ergebnisse der Glassorten erzielt, die sich erwartungsgemäß nicht gut chemisch ätzen lassen. Dies wird auf eine unerwartete Kombination zwischen physikalischen und chemischen Anteilen zurückgeführt.

In Versuchen hat sich herausgestellt, dass als chemisches Ätzgas CF₄ und als Sputtergas Argon-lonen besonders geeignet sind. Insbesondere die Kombination dieser beiden Gase führt zu hohen Ätzraten. Das erfindungsgemäße Verfahren ist jedoch nicht auf diese beiden Gase beschränkt. Vielmehr kann auch die Beimischung von anderen Ätzgasen, wie beispielsweise CHF₃, C₂F₆ und SF₆, und anderen Sputtergasen, wie beispielsweise Ne, Kr und Xe, vorteilhaft sein.

Des Weiteren zeigte sich in überraschender Weise, dass bei Variation der Gaszusammensetzung des CF₄ und Argon enthaltenen Ätzgases, die Ätzrate ein Maximum durchläuft. Eine besonders bevorzugte Weiterbildung der Erfindung sieht demzufolge vor, dass die Gase CF₄ und Argon in einem Mischungsverhältnis zwischen 1:1 bis 6:1, vorzugsweise in einem Mischungsverhältnis 2:1 bis 6:1, vorzugsweise in einem Mischungsverhältnis zwischen 2:1 und 4:1, und besonders bevorzugt in einem Mischungsverhältnis von ungefähr 3:1 liegen, wobei der CF₄-Anteil jeweils überwiegt.

Bei Anwendung des erfindungsgemäßen RIE-Verfahrens zeigte sich auch, dass unterschiedliche Glassorten sehr unterschiedlich auf eine Variation der Zusammensetzung des Ätzgases (insbesondere bei Variation des Verhältnisses zwischen CF₄ und Argon) reagieren. SiO₂ ist beim chemischen Ätzen mit CF₄ flüchtig, so dass sich eine vergleichsweise hohe Ätzrate einstellt. Glassorten mit Aluminium-, Titan-, Alkali-Oxiden und andere Anteilen sind hingegen chemisch schwer ätzbar. Es hat sich gezeigt, dass insbesondere bei Glassorten mit schwer ätzbaren Anteilen die Ätzrate durch Anwendung des erfindungsgemäßen Verfahrens (insbesondere bei Steigerung des Sputteranteils durch Argon-lonen) erblich gesteigert werden kann. Bei Flachgläsern mit einem Gehalt an SiO₂ + B₂O₅ von 60 - 90 (evtl. auch bis 95) Gew.%, wie z.B. den Schott-Glassorten BF 40 und AF 45, stellte sich bei Anwendung des erfindungsgemäßen Verfahrens eine vergleichsweise hohe Ätzrate ein, welche bei Variation der Ätzgaszusammensetzung ein ausgeprägtes Maximum durchläuft. Bei anderen Schott-Glassorten (z. B. 8261, 8264, BF 33, B270) hat sich unter gleichen Verfahrensbedingungen eine viel geringere Ätzrate ergeben. Hier war das erwähnte Maximum nicht oder wesentlich abgeschwächter erkennbar. Das bedeutet, dass Glassorten unterschiedlich auf die physikalische Komponente beim Ätzabtrag, nämlich auf die Beimischung von Argon-lonen, reagieren. Dieses Verhalten ist überraschend und konnte aus Ergebnissen von Vergleichsuntersuchungen nicht erwartet werden. Diese Vergleichsversuche wurden in einer Ionenstrahlätzapparatur mit einem Argon-Ionenstrahl durchgeführt (rein physikalischer Abtrag) und zeigten nur eine geringe Abhängigkeit der Ätzrate von der Glassorte.

Es ist bekannt, dass sich Siliziumoxid-Glas gut ätzen lässt. Jedoch ist dieses Glas schwierig zu produzieren und daher relativ teuer im Vergleich zu Multikomponentengläsern. Außerdem ist die Waferherstellung aus Flachgläsern einfacher und kostengünstiger als bei Si02 oder anderen Bulkgläsern. Eine bevorzugte Weiterbildung schlägt vor, das erfindungsgemäße Verfahren an Multikomponentengläsem durchzuführen, die vorzugsweise mindestens drei Komponenten enthalten. Es hat sich gezeigt, dass eine Reihe dieser Gläser hinsichtlich der Ätzrate und der Präzision der Strukturübertragung ein vergleichbares Ätzverhalten wie Siliziumoxid-Glas hat, sofern das erfindungsgemäße Verfahren eingesetzt wird. Das erfindungsgemäße RIE-Verfahren ermöglicht damit den Rückgriff auf preiswertere Ausgangsmaterialien ohne Einbußen in der Ätzqualität und -geschwindigkeit.

Als Multikomponentengläser eignen sich besonders solche mit oxidischen Komponenten, die vorzugsweise einen SiO2-Anteil aufweisen und vor allem insbesondere einen Anteil an Bor-, Aluminium- und/oder Alkali-Oxide enthalten, wobei sich bisher Borosilikat-Gläser am besten bewährt haben. Ein besonders gutes Ätzverhalten hat sich bei den preisgünstigen borhaltigen Flachgläsern der Fa. Schott mit der Bezeichnung BF 40 (ca. 93% [SiO₂ + B₂O₃) und 7% (Na₂O, K₂O, AL₂O₃)] und AF 45 [ca. 64% (SiO₂ + B₂O₃) und 36% (BaO, Al₂O₃)] gezeigt. Jedoch ist auch eine Übertragung des erfindungsgemäßen Verfahrens auf nichtoxidische Gläser möglich.

Es wurde die Ätzrate für verschiedene Glassorten in Abhängigkeit vom Prozessgasdruck für ein reines CF₄-Plasma untersucht und dabei in überraschender Weise festgestellt, dass optimale Drücke im Bereich von 30 mTorr (ca. 4000 Pa) bis 60 mTorr (ca. 8000 Pa) liegen. Mit steigendem Prozessgasdruck oberhalb von ca. 60 mTorr nimmt die Ätzrate ab. Dieser Zusammenhang wird darauf zurückgeführt, dass das lonenätzverfahren stets eine Kombination aus chemischer Reaktion (durch reaktive Radikale des Ätzgases) und physikalischem Abtrag (durch Ionenbeschuss mit Plasmaionen) ist. Bei hohem Druck und damit einhergehender geringen Bias-Spannung ist die physikalische Ätzkomponente gering, bei sehr niedrigem Druck werden nicht genügend reaktive Radikale des Ätzgases zur Verfügung gestellt.

Eine bevorzugte Weiterbildung des erfindungsgemäßen Verfahrens sieht vor, dass vor der Durchführung des RIE- bzw. MERIE-Verfahrens die Substratoberfläche mit einer Metallschicht beschichtet und einem Strukturierungsprozess unterworfen wird. Als Metallschicht hat sich eine Chromschicht besonders bewährt. Die strukturierten Metallschichten werden als Maskierschicht für das nachfolgende erfindungsgemäße chemisch reaktiven Ionenätzverfahrens, verwendet. Insbesondere Chrom-Schichten eignen sich besonders für derartige Trockenätzverfahren, da sie in Ätzgasplasmen relativ beständig gegenüber Ätzgasen wie CF₄, SF₆ oder Gemischen dieser Gase mit z. B. Argon sind. Dagegen decken Photoresistschichten in Ätzplasmen mit den genannten Ätzgasen die Substratoberflächen nur etwa 10 min ab und werden in dieser Zeit vollständig von den Ätzgasplasmen abgetragen. Bei dickeren Resistschichten kann außerdem leichter ein Abschattungseffekt auftreten.

Die Metall- bzw. Chrombeschichtung erfolgt vorzugsweise unter Verwendung eines Magnetron-Sputterverfahrens, durch das zweckmäßiger Weise Schichtdicken auf das Substrat aufgebracht werden, die in der Größenordnung von 150 nm liegen.

Die Metall- bzw. Chromschicht wird beim Ätz-Prozess ebenfalls angegriffen und wenigstens teilweise weggeätzt. Um den Verfahrensschritt des nachfolgenden Entfernens der verbliebenen Metall- bzw. Chromschicht zu vermeiden, schlägt eine Weiterbildung der Erfindung vor, die Dicke der Metall- bzw. Chromschicht so zu wählen, dass sie während des Ätz-Prozesses vollständig weggeätzt wird.

An diesen Beschichtungsprozess schließt sich gemäß einer Weiterbildung des erfindungsgemäßen Verfahrens ein photolithographischer Prozess zur Strukturierung der Chromschicht an. Hierbei ist es von Vorteil, auf die Metallschicht eine Resistschicht aufzutragen. Anschließend kann die Resistschicht mit einer Maske belichtet und dann entwickelt werden, so dass die Metallschicht an den gewünschten Bereichen frei liegt. Schließlich werden die freigelegten Metallschichtbereiche durch Ätzen abgetragen.

Es hat sich als vorteilhaft herausgestellt, wenn nach dem Auftragen der Resistschicht eine Softbake-Behandlung erfolgt und/oder nach dem Entwickeln der Resistschicht eine Hardbake-Behandlung erfolgt, durch welche die Resistschicht stabilisiert wird.

Nach Anwendung des lonenätzverfahrens werden die Metallmaskierschichten nasschemisch, beispielsweise mit Schwefelsäure, abgelöst.

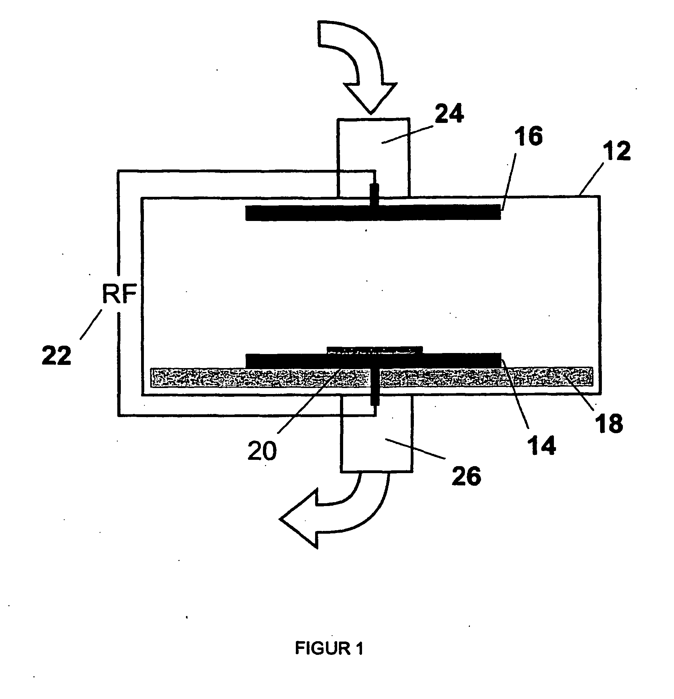

Das erfindungsgemäße Verfahren zur Mikrostrukturierung von Substraten wird anhand der Figur 1, die eine Apparatur zur Mikrostrukturierung gemäß der vorliegenden Erfindung zeigt, sowie von Ausführungsbeispielen näher erläutert.

Die Figur zeigt einen Plasmareaktor bei dem in einer Vakuumkammer 12 eine Kathode 14 und eine Anode 16 gegenüberliegend angeordnet sind. Die Kathode 14 wird durch einen Kühler 18 gekühlt. Auf der Kathode 14 befindet sich eine Probe 20, insbesondere ein Flachglas, welches der Mikrostrukturierung unterworfen wird. Es ist ein RF-Hochfrequenzgenerator 22 vorgesehen, der eine Hochfrequenzleistung erzeugt, die über die Kathode 14 in die Probe 20 eingekoppelt wird. Des Weiteren steht der RF-Generator 20 mit der Anode 16 in Verbindung.

Die Vakuumkammer 12 enthält einen Einlaß 24 und einen Auslaß 26 über die das jeweilige Gasgemisch ein- bzw. ausgelassen wird.

Es wurden Versuche an zwei Flachgläsern aus Schott-Glas BF 40 sowie aus Schott-Glas AF 45 durchgeführt, die als Substrat dienten und eine Größe von ca. 50 x 50 mm² hatten. Eine Oberfläche dieser Flachgläser wurde zunächst mit einer Chromschicht von 150 nm Dicke im Magnetron-Sputterverfahren beschichtet. Danach erfolgte ein photolithographischer Prozess zur Strukturierung der Chrom-Schicht.

Beim photolithographischen Prozess wurde zunächst Resist AZ 5214 E (Hersteller: Clariant) für 3 Sekunden bei 1000 U/min und für 40 Sekunden bei 4000 U/min aufgeschleudert, wobei eine Resistdicke von 1,4 µm erreicht wurde. Die Resistschicht wurde für 3 min einem Softbake-Verfahren bei 105 °C ausgesetzt. Anschließend wurde das Resist mit einer Testmaske am Maskaligner mit 25 mW/cm² für 5 sec belichtet. Um minimale Strukturauflösungen untersuchen zu können, wurde eine Elektronen-Strahl geschriebene Maske verwendet. Das Resist wurde nun mit dem Entwickler AZ 826 MIF (Hersteller: Clariant) bei einer Entwicklungszeit von 40 sec entwickelt. Es schloss sich ein Hardbake-Verfahren des Resist bei 120 °C über 5 min an. Nun erfolgte die Strukturierung der Chrom-Schicht mit Chrom-Etch bei 50 °C und einer Ätzzeit von 20 sec. Dabei setzte sich das Ätzbad Chrom-Etch aus 1000 ml DI-Wasser, 150 g (NH₄)₂Ce(NO₃)₆ und 35 ml CH₃COOH (96%ig) zusammen.

Die auf diese Weise strukturierte Chrom-Schicht diente als Maskierschicht für das nachfolgende Trockenätzen, welches beispielsweise in dem oben beschriebenen Plasmareaktor bei einer HF-Plasmaleistung von 300 W und einem Prozessgasdruck von 58 mTorr über eine Zeitdauer von 21 min erfolgte. Es wurden weitere Versuche bei unterschiedlichen Ätzgasgemischen aus CF₄/Ar durchgeführt:

| | | |
|---|---|---|
| a. | reines CF₄ : | CF₄-Flow: 49 sccm |
| b. | CF₄: Ar = 3 : 1 : | CF₄-Flow: 49 sccm, Ar-Flow: 17 sccm |
| c. | CF₄: Ar = 2,0: 1 : | CF₄-Flow :49 sccm, Ar-Flow: 24,5 sccm |
| d. | CF₄: Ar = 1: 1 : | CF₄-Flow: 24 sccm, Ar-Flow: 24 sccm |

Es zeigte sich, dass die Gaszusammensetzung einen Einfluss auf die entstehende Bias-Spannung hat. Bei reinem CF₄ ergibt sich mit den genannten Prozessparametem eine Bias-Spannung von -540 V. Bei einer Plasma-Leistung von 300 W wurde eine Mischungsserie von 1:1, 2, 4:1, 2,9:1, 3,5:1 und 4,9:1 durchgeführt. Die Bias-Spannung lag im Bereich von -540 V.

Nach dem Ätzprozess wurden die Chrom-Maskierschichten nasschemisch mit Schwefelsäure abgelöst.

Die Versuche im Plasmareaktor wurden bei einer HF-Plasmaleistung von 300 W und ein einem Gesamtfluss der eingeleiteten Betriebsgase zwischen 49 und 66 sccm durchgeführt. Für die industrielle Anwendung sind jedoch erheblich höhere HF-Plasmaleistungen (beispielsweise bis zu ca. 3000 W) und höhere Gesamtflusswerte (beispielsweise bis zu 300 sccm) zu empfehlen, um die Ätzrate zu steigern.

Die geätzte Substratoberfläche wurde nun einer Begutachtung mit Mikroskop zur Erfassung der Struktur und mit einem mechanischen Oberflächenprofilometer (Hersteller : Dektak 3) zur Erfassung der Ätztiefe, der Profilläufe und der Oberflächenrauhigkeit unterworfen, um die Qualität der Strukturübertragung der Maskenstruktur in das Glas zu überprüfen.

Bei Variation der Gaszusammensetzung zeigte sich, dass sich eine Erhöhung der physikalischen Komponente des Ätzabtrags durch ArgonIonen unterschiedlich auf verschiedene Glassorten auswirkt. Diese Erhöhung hatte auch einen stärkeren Abtrag der Resist-Chrom-Maske zur Folge.

Es wurde festgestellt, dass bei Variation der Gaszusammensetzung die physikalische Komponente des Ätzabtrages durch Ionenbeschuss der Oberfläche mit Argon-lonen einen signifikanten Einfluss auf die Ätzrate hat. Bei der Zusammensetzung CF₄ : Ar = 3 : 1 zeigte sich eine erhebliche Steigerung der Ätzrate, die ungefähr das 2,5-fache der Ätzrate bei reinem CF₄-Ätzgas betrug. Maximale Ätzraten für BF 40 wurden im Bereich 3,5:1 bis 4,9:1 festgestellt. Mit weiter steigendem Argon-Anteil fiel dann die Ätzrate wieder ab. Jedoch lag bei der Zusammensetzung CF₄ : Ar = 1 : 1 für das Schott-Glas BF 40 die Ätzrate immer noch deutlich höher als bei einem reinen CF₄-Prozess.

Bei den Gasgemischen mit einem Argon-Anteil war die Oberflächenrauhigkeit gegenüber den Prozessen mit reinem CF₄-Plasma nicht signifikant verändert. Es konnten mit dem erfindungsgemäßen Verfahren sehr kleine Strukturdimensionen von 1 - 2 *µ*m übertragen werden. Bei einer Ätzzeit von ca. 20 min konnten Ätztiefen von 600 nm erreicht werden.

Es wurden auch Versuche durchgeführt, bei denen der Prozessgasdruck zwischen 30 mTorr und 160 mTorr variiert wurde. Dabei zeigte sich, dass die Bias-Spannung auch vom gewählten Prozessgasdruckes abhängt und mit steigendem Prozessgasdruck abfällt. Es zeigte sich auch, dass der optimale Prozessgasdruck im Bereich zwischen 30 mTorr und 60 mTorr liegt. Mit steigendem Prozessgasdruck oberhalb von ca. 60 mTorr nimmt die Ätzrate ab.

Ein besonders bevorzugtes Anwendungsgebiet für das erfindungsgemäße Mikrostrukturierungsverfahren stellt die Herstellung von elektronischen, insbesondere von opto-elektronischen, Bauelementen dar. Geeignete Wafer-Packaging-Verfahren zur Herstellung von Image-Chips sind in der DE 102 22 960 A1 beschrieben. Durch diese Verfahren lassen sich zusätzliche optische Elemente (beispielsweise Mikrolinsenarrays oder DOEs) in Deckgläser einbinden, wodurch die elektronischen Bauelemente kompakter und platzsparender gestaltet werden können. Die Optik kann dabei aus einem preiswerten Multikomponentenglas anstatt aus Kieselglas und dergleichen bestehen.

Beispielsweise wird für die Herstellung wenigstens ein Flachglaswafer und ein Siliziumwafer verwendet, wobei der Siliziumwafer strukturiert ist und eine Vielzahl von sensorisch aktiven und/oder emittierenden Elementen aufweist. Der Glaswafer wird mit Kavitäten versehen (z. B. unter Anwendung von nasschemischem Ätzen), deren Lagen mit denen der Elemente des Siliziumwafers korrespondieren. Auf der Seite der Kavitäten und/oder auf der gegenüberliegenden Oberfläche des Glaswafers werden unter Anwendung des erfindungsgemäßen Mikrostrukturierungs-Verfahrens optische Zusatzfunktionen (wie Mikrolinsenarrays oder diffraktive optische Elemente) aufgebracht, deren Lagen ebenfalls mit denen der Elemente des Siliziumwafers korrespondieren. Die beiden Wafer werden nun zusammengefügt (bonden) und dann vereinzelt, wobei die einzelnen Bauelemente, z. B. Image-Chips entstehen. Da die Optiken mit dem Glaswafer vor dem Vereinzeln auf die Elemente des Siliziumwafers aufgebracht werden, ist lediglich ein Justageschritt pro Waferpaar erforderlich. Die Kavitäten sollen einen ausreichenden Abstand zwischen der Glaswaferoberfläche und den Elementen des Siliziumwafers sicherstellen. Anstelle der Kavitäten können auch geeignete strukturierte Abstands- oder Verbindungsschichten zwischen den beiden Wafem eingefügt werden.

Weitere Anwendungen für das erfindungsgemäße Mikrostrukturierungsverfahren liegen auf dem Gebiet der Mikro-Optiken, durch die eine Strahlformung, Strahllenkung oder Wellenlängenselektion (Filter) erfolgen kann, und die beispielsweise bei Optiken für Digitalkameras oder für Laserdioden verwendet werden.

Konkrete optischen Strukturen sind hierbei beispielsweise Bragg-Gitter, diffraktive optische Elemente, Phasenhologramme, Mikrolinsen (- arrays) und Fresnel- (Zonen-) Linsen.
Auch wenn die Erfindung lediglich anhand der vorstehenden Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Verfahren zur Mikrostrukturierung von Substraten aus Multikomponentenglas mit wenigstens zwei Komponenten, insbesondere aus Flachglas, bei dem eine Substratoberfläche mit wenigstens einer strukturierten Maskierschicht beschichtet und anschließend einem chemisch reaktiven lonenätzverfahren mit wenigstens einem chemischen Ätzgas ausgesetzt wird, wobei dem chemischen Ätzgas wenigstens ein Edelgas beigemischt wird,
**dadurch gekennzeichnet,**
**dass** das chemische Ätzgas und das Edelgas in einem Mischungsverhältnis zwischen 2:1 bis 6:1, vorzugsweise in einem Mischungsverhältnis zwischen 2:1 und 4:1, und besonders bevorzugt in einem Mischungsverhältnis von ungefähr 3:1 liegen, wodurch einerseits der Anteil des Sputterätzens beim lonenätzverfahren signifikant erhöht wird und jedoch andererseits der Anteil des chemischen Ätzgases deutlich überwiegt.

2. Verfahren nach Anspruch 1, **dadurch gekennzeichnet, dass** das als Reaktionsgas verwendete chemische Ätzgas als einen Hauptstandteil CF₄ oder CHF₃ enthält.

3. Verfahren nach Anspruch 1 oder 2, **dadurch gekennzeichnet, dass** das als Sputtergas verwendete Edelgas Argon enthält.

4. Verfahren nach einem der vorhergehenden Ansprüche, **dadurch gekennzeichnet, dass** das Verfahren an Multikomponentengläsem mit mindestens drei Komponenten durchgeführt wird.

5. Verfahren nach Anspruch 4, **dadurch gekennzeichnet, dass** die Multikomponentengläser oxidische Komponenten, insbesondere mit einem Anteil an Bor-, Aluminium- und/oder Alkali-Oxide, enthalten.

6. Verfahren nach einem der vorhergehenden Ansprüche, **dadurch gekennzeichnet, dass** das Verfahren an Flachgläser durchgeführt wird mit einem Anteil an SiO₂ + B₂O₃ von 60 - 95 Gew.%.

7. Verfahren nach einem der vorhergehenden Ansprüche, **dadurch gekennzeichnet, dass** das Verfahren an Flachgläsern durchgeführt wird mit einem Anteil an Al₂O₃, BO und/oder TiO₂ von 5 bis 40 Gew.%.

8. Verfahren nach einem der vorhergehenden Ansprüche, **dadurch gekennzeichnet, dass** der Prozessgasdruck auf 30 mTorr bis 60 mTorr eingestellt wird.

9. Verfahren nach einem der vorhergehenden Ansprüche, **dadurch gekennzeichnet, dass** die Substratoberfläche mit einer Metallschicht, insbesondere einer Chromschicht, beschichtet und die Metall- bzw. Chromschicht einem Strukturierungsprozess unterworfen wird.

10. Verfahren nach Anspruch 8, **dadurch gekennzeichnet, dass** die Metallbeschichtung unter Verwendung eines Magnetron-Sputterverfahrens erfolgt.

11. Verfahren nach Anspruch 9 oder 10, **dadurch gekennzeichnet, dass** die Metallschichtdicke so gewählt wird, dass das Metall beim nachfolgenden lonenätzverfahren vollständig weggeätzt wird.

12. Verfahren nach einem der Ansprüche 9 bis 11, **dadurch gekennzeichnet, dass** die Strukturierung der Metallschicht durch einen photolithographischen Prozess erfolgt.

13. Verfahren nach einem der Ansprüche 9 bis 12, **dadurch gekennzeichnet, dass** auf die Metallschicht eine Resistschicht aufgetragen wird, dass die Resistschicht mit einer Testmaske belichtet und dann entwickelt wird und dass die freigelegten Metallschichtbereiche durch Ätzen abgetragen werden.

14. Verfahren nach Anspruch 13, **dadurch gekennzeichnet, dass** nach dem Auftragen der Resistschicht eine Softbake-Behandlung erfolgt und/oder nach dem Entwickeln der Resistschicht eine Hardbake-Behandlung erfolgt.

15. Verfahren nach einem der Ansprüche 9 bis 14 **dadurch gekennzeichnet, dass** nach Anwendung des lonenätzverfahrens die Reste der Metall- bzw. Chrommaskierschichten nasschemisch abgelöst werden.

## Claims

1. Process for micro-patterning substrates made from multicomponent glass comprising at least two components, in particular made from flat glass, in which a substrate surface is coated with at least one patterned masking layer and is then subjected to a chemically reactive ion etching process using at least one chemical etching gas, wherein at least one noble gas is admixed with the chemical etching gas,
**characterized**
**in that** the chemical etching gas and the noble gas are in a mixing ratio of between 2:1 and 6:1, preferably in a mixing ratio of between 2:1 and 4:1, and particularly preferably in a mixing ratio of approximately 3:1, with the result that on the one hand the proportion of sputter etching is significantly increased during the ion etching process and, on the other hand, however, the proportion of the chemical etching gas is dominant to a significant extent.

2. Process according to Claim 1, **characterized in that** the chemical etching gas used as reaction gas contains CF₄ or CHF₃ as a main constituent.

3. Process according to Claim 1 or 2, **characterized**
**in that** the noble gas used as sputtering gas contains argon.

4. Process according to one of the preceding claims, **characterized in that** the process is carried out on multicomponent glasses comprising at least three components.

5. Process according to Claim 4, **characterized in that** the multicomponent glasses contain oxidic components, in particular comprising a proportion of boron, aluminium, and/or alkali metal oxides.

6. Process according to one of the preceding claims, **characterized in that** the process is carried out on flat glasses with an SiO₂ + B₂O₃ content of 60 - 95% by weight.

7. Process according to one of the preceding claims, **characterized in that** the process is carried out on flat glasses with an Al₂O₃, BO and/or TiO₂ content of from 5 to 40% by weight.

8. Process according to one of the preceding claims, **characterized in that** the process gas pressure is set to from 30 mTorr to 60 mTorr.

9. Process according to one of the preceding claims, **characterized in that** the substrate surface is coated with a metal layer, in particular a chromium layer, and the metal or chromium layer is subjected to a patterning process.

10. Process according to Claim 8, **characterized in that** the metal coating operation is carried out using a magnetron sputtering process.

11. Process according to Claim 9 or 10, **characterized in that** the metal layer thickness is selected in such a way that the metal is completely etched away during the subsequent ion etching process.

12. Process according to one of Claims 9 to 11, **characterized in that** the patterning of the metal layer is carried out by means of a photolithographic process.

13. Process according to one of Claims 9 to 12, **characterized in that** a resist layer is applied to the metal layer, **in that** the resist layer is exposed using a test mask and then developed, and **in that** the uncovered metal layer regions are removed by etching.

14. Process according to Claim 13, **characterized in that** a softbake treatment is carried out following the application of the resist layer and/or a hardbake treatment is carried out after the developing of the resist layer.

15. Process according to one of Claims 9 to 14, **characterized in that** after the ion etching process has been employed the remainders of the metal or chromium masking layers are removed by wet-chemical means.

## Revendications

1. Procédé de microstructuration de substrats en verre à plusieurs composants qui contient au moins deux composants, et en particulier en verre plat, dans lequel la surface d'un substrat est revêtue d'au moins une couche structurée de masquage et subit ensuite une opération de gravure par ions chimiquement réactifs à l'aide d'au moins un gaz de gravure chimique, au moins un gaz rare étant ajouté au gaz de gravure chimique,
**caractérisé en ce que**
le rapport de mélange du gaz de gravure chimique et du gaz rare est compris entre 2 : 1 et 6 : 1, de préférence entre 2 : 1 et 4 : 1 et de façon particulièrement préférable d'environ 3 : 1, ce qui d'une part entraîne que la proportion de la gravure par pulvérisation lors de l'opération de gravure par ions est significativement accrue mais d'autre part que la proportion de la gravure par le gaz de gravure chimique est nettement prédominante.

2. Procédé selon la revendication 1, **caractérisé en ce que** le gaz de gravure chimique utilisé comme gaz réactif contient comme composant principal CF₄ ou CHF₃.

3. Procédé selon les revendications 1 ou 2,
**caractérisé en ce que** le gaz utilisé comme gaz de pulvérisation contient de l'argon.

4. Procédé selon l'une des revendications précédentes, **caractérisé en ce que** le procédé est exécuté sur des verres à plusieurs composants qui contiennent au moins trois composants.

5. Procédé selon la revendication 4, **caractérisé en ce que** les verres à plusieurs composants contiennent des composants oxydés et en particulier une teneur en oxydes de bore, d'aluminium et/ou de métaux alcalins.

6. Procédé selon l'une des revendications précédentes, **caractérisé en ce que** le procédé est réalisé sur du verre plat dont la teneur en SiO₂ + B₂O₃ est de 60 à 95 % en poids.

7. Procédé selon l'une des revendications précédentes, **caractérisé en ce que** le procédé est réalisé sur du verre plat dont la teneur en Al₂O₃, BO et/ou TiO₂ est comprise entre 5 et 40 % en poids.

8. Procédé selon l'une des revendications précédentes, **caractérisé en ce que** la pression du gaz de traitement est réglée entre 30 mTorr à 60 mTorr.

9. Procédé selon l'une des revendications précédentes, **caractérisé en ce que** la surface du substrat est revêtue d'une couche métallique et en particulier d'une couche de chrome, la couche métallique ou de chrome subissant une opération de structuration.

10. Procédé selon la revendication 8, **caractérisé en ce que** le revêtement métallique s'effectue en recourant à un procédé de pulvérisation à magnétrons.

11. Procédé selon les revendications 9 ou 10, **caractérisé en ce que** l'épaisseur de la couche métallique est sélectionnée de telle sorte que le métal soit complètement retiré lors de l'opération ultérieure de gravure par ions.

12. Procédé selon l'une des revendications 9 à 11, **caractérisé en ce que** la structuration de la couche métallique s'effectue par un procédé photolithographique.

13. Procédé selon l'une des revendications 9 à 12, **caractérisé en ce qu'**une couche de vernis de masquage est appliquée sur la couche métallique, **en ce que** la couche de vernis de masquage et éclairée à l'aide d'un masque de test et est ensuite développée et **en ce que** les parties libérées de la couche métallique sont enlevées par gravure.

14. Procédé selon la revendication 13, **caractérisé en ce qu'**après l'application de la couche de vernis de masquage, on réalise un traitement de cuisson "molle" et/ou **en ce qu'**après le développement de la couche de vernis de masquage, on réalise un traitement de cuisson "dure".

15. Procédé selon l'une des revendications 9 à 14, **caractérisé en ce qu'**après recours à l'opération de gravure par ions, les résidus des couches de masquage en métal ou en chrome sont détachés par voie chimique humide.
